Europäisches Patentamt

European Patent Office

Office européen des brevets

(11) Veröffentlichungsnummer: **0 090 434**
**B1**

(12) **EUROPÄISCHE PATENTSCHRIFT**

(19)

(45) Veröffentlichungstag der Patentschrift:
10.10.84

(21) Anmeldenummer: 83200043.4

(22) Anmeldetag: 12.01.83

(51) Int. Cl.³: **C 04 B 13/26, C 04 B 13/28,
C 08 G 14/06, C 08 G 14/12**

(54) Verflüssigungsmittel für mineralische Bindemittel.

(30) Priorität: 22.03.82 DE 3210458

(43) Veröffentlichungstag der Anmeldung:
05.10.83 Patentblatt 83/40

(45) Bekanntmachung des Hinweises auf die Patenterteilung:
10.10.84 Patentblatt 84/41

(84) Benannte Vertragsstaaten:
AT BE CH DE FR LI NL

(56) Entgegenhaltungen:
DE - B - 2 653 801
DE - C - 891 021
DE - C - 2 033 015
FR - A - 2 228 041

CHEMICAL ABSTRACTS, Band 87, Nr. 22, 28. November
1977, Seite 248, Nr. 171927h, Columbus, Ohio, USA KH.
A. BIINAZAROVA et al.: "Effect of the water-soluble
polyelectrolyte AP on the hydration and structure
formation of portland cement"

(73) Patentinhaber: Rütgerswerke Aktiengesellschaft,
Mainzer Landstrasse 217, D-6000 Frankfurt
a.Main 1 (DE)

(72) Erfinder: Omran, Jafar, Dr., Ahornstrasse 25,
D-4620 Castrop-Rauxel (DE)
Erfinder: Zander, Maximilian, Prof. Dr., Friedenstrasse 9,
D-4620 Castrop-Rauxel (DE)

## Beschreibung

Die Erfindung betrifft neue Verflüssigungsmittel für mineralische Bindemittel auf Basis von wasserlöslichen Kondensationsprodukten von Phenolkörpern mit Formaldehyd.

Mineralische Bindemittel, zu denen hydraulische Bindemittel wie Zement, hydraulischer Kalk, Gips, Anhydrit und Anreger oder nur an der Luft erhärtende Bindemittel wie Kalk gehören, werden vor ihrer Anwendung beim Bau allein oder in Abmischung mit Zuschlagstoffen mit Wasser in eine verarbeitbare, d. h. knetbare, streichfähige, pumpbare oder fließfähige Form gebracht.

Dabei ergibt sich im allgemeinen das Problem, daß zum Anteigen dieser Bindemittel und Zuschlagstoffe wesentlich mehr Anmachwasser notwendig ist, als bei der darauffolgenden chemischen Vernetzungsreaktion benötigt wird.

Die Folge ist, daß nach dem Abbinden das überschüssige Wasser verdunsten muß und der von ihm eingenommene Platz im Baukörper als Hohlraum zurückbleibt. Durch diese Hohlräume wird die mechanische Festigkeit des Baukörpers in starkem Maße beeinträchtigt. Dies ist besonders bei Betonbauten von großer technischer Bedeutung.

Man gibt daher dem Wasser/Bindemittel-Gemisch geringe Mengen eines Verflüssigungsmittels zu und erzielt damit eine Reduzierung des Wasseranteils bei gleichbleibender Fließfähigkeit der Mischung bzw. man verbessert die Fließfähigkeit ohne die Wassermenge erhöhen zu müssen, was z. B. bei Fließestrichen sehr wesentlich ist.

Als derartige Verflüssigungsmittel sind bislang folgende Zubereitungen beschrieben:

Wäßrige Lösungen von Salzen der Lignin-Sulfonsäure, Mischungen aus Cellulose-äthern und Tensiden, in Wasser gelöste Melamin-Formaldehyd-Kondensationsprodukte, wäßrige Lösungen der Salze von Naphthalin-Formaldehyd-Kondensationsprodukte, wäßrige Emulsionen von Montanwachs, einem Alkylphenylpolyglykoläther und einem mit Äthylen- oder Propylenoxid umgesetzten Fettalkohol sowie wäßrige Lösungen der Alkalisalze sulfonierter Styrol/Inden-Copolymerisationsprodukte.

Besonders günstige Ergebnisse hinsichtlich der Verflüssigungswirkung, der Stabilität der Mischungen vor und während des Abbindevorgangs und der geringen Abhängigkeit des Abbindeverhaltens von der Dosierung der Verflüssigungsmittel zeigen solche auf Basis von wasserlöslichen Kondensationsprodukten von Phenolkörpern mit Formaldehyd wie sie aus verschiedenen Schriften bekannt sind.

Die Verflüssiger gemäß DE-A-2 204 275 erfordern eine aufwendige und komplizierte Herstellung, wobei zuerst die Phenole sulfoniert und danach mit Formaldehyd kondensiert werden. Daran schließt sich eine weitere Umsetzung mit einem Glykol an, die zudem noch mehrstufig durchgeführt werden muß.

Der in der DE-A-2 935 719 beschriebene Betonverflüssiger besteht aus einem teilweise sulfonierten bzw. sulfomethylierten Kondensationsprodukt von Phenolen mit Formaldehyd, bei dem die phenolierten OH-Gruppen veräthert sind. Auch dieser Verflüssiger hat den Nachteil einer umständlichen Herstellung und ist daher aus preislichen Gründen nicht konkurrenzfähig, zumal gerade bei diesen Verflüssigungsmitteln der Preis für die Verkaufsfähigkeit von großer Bedeutung ist.

Wasserlösliche Phenol-Formaldehyd-Kondensationsprodukte beansprucht die DE-B-2 653 801, wobei als besonderer Vorteil neben einer einfachen Herstellung das günstige Verhältnis von Erstarrungsbeginn und -ende hervorgehoben ist. Jedoch ist der Verflüssigungsvorteil der beschriebenen Phenol-Formaldehydharz-Sulfonsäuren gegenüber Calciumligninsulfonat oder sulfoniertem Melamin-Harz gering und der störende zu hohe Luftgehalt im Mörtel soll, wie in der DE-B-2 653 801 beschrieben, durch Beimischung von sulfoniertem Melaminharz gesenkt werden.

Auch die DE-A-2 405 437 und DE-A-2 421 222 offenbaren die Verwendung von sulfonierten Phenol-Formaldehyd-Kondensationsprodukten als Betonverflüssiger, jedoch verzögern die in diesen Schriften aufgeführten Verbindungen das Abbinden des Rohzements sehr stark. Überdies neigen die Produkte in wäßriger Lösung zum Schäumen und können daher den Luftporenanteil in der Bindemittelmasse in unerwünschtem Maße erhöhen.

Es ist daher Aufgabe der Erfindung, verbesserte, billige Verflüssigungsmittel für mineralische Bindemittel bereitzustellen, die einen guten Verflüssigungseffekt, ein günstiges Härtungsverhalten und einen möglichst geringen Luftporengehalt im Baukörper bewirken.

Die Lösung der Aufgabe erfolgt durch die Verflüssigungsmittel gemäß Anspruch 1.

Geeignet sind wasserlösliche Phenol-Carbazol-Formaldehydresole sowie sauer kondensierte wasserlösliche Phenol-Carbazol-Formaldehyd-Cokondensationsprodukte, deren Löslichkeit durch Sulfogruppen bedingt ist.

Cokondensationsprodukte aus Phenolen, Carbazol und Formaldehyd sind aus den deutschen Patentschriften 891 021 und 2 033 015 bekannt.

Es wurde überraschend gefunden, daß durch die Cokondensation von Phenolen mit Carbazol bei der Herstellung von Verflüssigungsmitteln für mineralische Bindemittel neben der erwarteten Verbilligung der Produkte auch eine beachtliche Verbesserung der Eigenschaften erzielt wurde.

So sind im Vergleich zu reinen, wasserlöslichen Phenol-Formaldehyd-Kondensationsprodukten, wie sie in DE-B-2 653 801 beschrieben sind, sowohl der Verflüssigungseffekt verbessert als auch der Luftporengehalt im Bindemittelgemisch reduziert. Ein besonderer Vorteil aber ist die bereits bei den wasserlöslichen Phenol-Formaldehyd-Kondensationsprodukten hervorgehobene günstige zeitabhängige Beeinflussung des Erstarrungsverhaltens der Mörtelmischung, die bei dem erfindungsgemäßen Verflüssigungsmittel noch günstiger ist. Die Erstarrung beginnt langsam, zeigt dann aber keinen unerwünschten Verzögerungseffekt. Dieses Verhalten ist von entscheidendem Vorteil bei der praktischen Verwendung als Betonverflüssiger.

Die Herstellung der erfindungsgemäßen Verflüssigungsmittel ist sehr einfach durchzuführen. Entweder werden durch Cokondensation von Phenol oder Phenolgemisch mit Carbazol und Formalin im alkalischen Bereich wasserlösliche Resoltypen hergestellt oder Phenol bzw. ein Phenolgemisch und Carbazol werden mit Formaldehyd zu Novolaktypen kondensiert, die anschließend sulfoniert und danach neutralisiert werden.

Ausgangsprodukte für die erfindungsgemäßen Verflüssigungsmittel sind ein- oder mehrkernige Phenole oder Gemische der genannten Verbindungsklassen. Hierbei ist es gleichgültig, ob ein- oder mehrkernige Phenole verwendet werden, da beide Klassen im erfindungsgemäßen Sinne wirksame Kondensationsprodukte bilden können. Im einzelnen kommen hierfür einkernige Phenole, und zwar sowohl ein- als auch mehrwertige Phenole, wie das Phenol selbst, sowie dessen alkyl-substituierte Homologe, wie o-, m- oder p-Kresol in Betracht. Außerdem sind halogensubstituierte Phenole günstig, wie das Chlor- oder Bromphenol und mehrwertige Phenole wie Resorcin oder Brenzkatechin. Unter den mehrkernigen Phenolen sind einerseits z. B. Naphthole, d. h. Verbindungen mit anellierten Ringen, zu verstehen. Andererseits sind aber auch solche mehrkernige Phenole im erfindungsgemäßen Sinne verwendbar, die durch aliphatische Brücken oder durch Heteroatome, wie Sauerstoff, verknüpft sind. Außerdem liefern auch mehrwertige mehrkernige Phenole günstige Produkte.

Als Einzelverbindungen unter den mehrkernigen Vertretern sind z. B. $\alpha$- oder $\beta$-Naphthol bzw. deren methyl- oder niedrigalkylsubstituierten Homologen einerseits, andererseits 4,4'-Dihydroxydiphenylmethan oder 4,4'-Dihydroxydiphenyläther zu nennen.

Die Phenole oder Phenolgemische werden erfindungsgemäß mit 5—25 Gew.-% Carbazol vermengt. Als Carbazol kann entweder reines Carbazol mit einem Gehalt von 97 bis 100% oder wohlfeiles, technisches Carbazol, sogenannte Carbazolfraktion mit einem Gehalt von 60 bis 95% verwendet werden.

Diese Ausgangsprodukte werden mit Formaldehyd oder einer Substanz, die unter den Reaktionsbedingungen Formaldehyd abzuspalten vermag, umgesetzt. Produkte dieser Art sind z. B. Formaldehyd selbst bzw. dessen handelsübliche 30- bis 50%ige wäßrige Lösung (Formalin) oder Substanzen, die Formaldehyd in chemisch lockerer Form gebunden enthalten, wie Formaldehydbisulfit, Urotropin, Trioxymethylen oder Paraformaldehyd.

Die anschließende Sulfonierungsreaktion erfolgt mit Schwefelsäure bzw. Substanzen, welche wie Schwefelsäure selbst in der Lage sind, eine Substitution durch Sulfonatgruppen hervorzurufen, wie z. B. Schwefeltrioxid, Oleum oder Chlorsulfonsäure.

Die erhaltenen sulfonsauren Produkte werden mit Alkali- oder Erdalkalilauge neutralisiert, wobei pH-Werte von ca. 6,5 bis 8,5 eingestellt werden.

Man erhält als Reaktionsprodukte wäßrige Zubereitungen mit einem Feststoffgehalt von 20 bis 40 Gew.-%. Diese Zubereitungen werden meist unverändert als Verflüssigungsmittel eingesetzt, wobei 0,5—5 Gew.-% dieser Verflüssigungsmittel entweder dem zu verwendenden Anmachwasser oder dem Bindemittel bzw. einem bereits angeteigten Gemisch aus Bindemittel und Zuschlagstoffen beigefügt und intensiv vermischt werden.

Die folgenden Beispiele zeigen die Herstellung der erfindungsgemäßen Verflüssigungsmittel und ihre Anwendung.

## Beispiel 1

a) 100 g Brenzkatechin, 200 g Carbazolfraktion mit einem Carbazolgehalt von 76% und 700 g Phenol werden in einem Rundkolben, versehen mit Rührwerk, Tropftrichter und Rückflußkühler mit 11 g Oxalsäure, gelöst in 59 g Wasser, versetzt.
Es wird zum Sieden erhitzt und innerhalb 90 min mit 490 g 38%iger Formalinlösung versetzt. Danach wird 150 min lang bei Siedehitze gerührt.
Anschließend erfolgt eine Destillation unter Normaldruck, die in 135 min auf 130°C führt. Danach wird noch 3 min lang im Vakuum weiterdestilliert.
Es wird ein braunes, gut fließendes Harz erhalten.
Ausbeute: 1042 g.
E. P. (K. S.): 53°C.
1042 g des oben beschriebenen Harzes werden in einem Rundkolben mit Rührwerk, Tropftrichter, Rückflußkühler und Kontaktthermometer bei 130°C bis 145°C in 30 min mit 732,5 g konzentrierter Schwefelsäure versetzt. Es wird 10 min lang bei 130°C bis 140°C nachgerührt.
Danach werden langsam 3549 g Wasser zugegeben und dann mit 1037,8 g 40%iger Natronlauge bis pH=7,87 versetzt.
Ausbeute: 6360 g einer wäßrigen Lösung mit einem Festgehalt von 28 Gew.-%.

3

**0 090 434**

Diese wäßrige Lösung wird als Verflüssigungsmittel eingesetzt.
b) Die Prüfung als Verflüssigungsmittel für Zement erfolgt durch Untersuchungen damit hergestellter Mörtel und des ausgehärteten Betons gemäß den DIN-Vorschriften

| DIN 18 555, Abschnitt 9 | Ausbreitmaß |
|---|---|
| DIN 1164, Teil 7 | Festigkeit |
| DIN 1164, Teil 5 | Erstarrungsprüfung |

Dazu werden zwei verschiedene Versuchsgemische herangezogen.
Gemisch 1 besteht aus

450 g Portlandzement PZ 350
1350 g Normensand nach DIN 1164
Wasser, entsprechend den angegebenen Wasser/Zement-Faktoren
4,5 g Verflüssigungsmittel

In Gemisch 2 wird anstelle des Portlandzements Hochofenzement HOZ 35 L eingesetzt.
Parallel werden die Versuche als 0-Versuche ohne Verflüssigungsmittel durchgeführt.
Die ermittelten Werte sind in der nachfolgenden Aufstellung angegeben:

| | PZ 35 F Gemisch 1 | 0-Versuch | HOZ 35 L Gemisch 2 | 0-Versuch |
|---|---|---|---|---|
| Wasser/Zement-Faktor | 0,46 | 0,5 | 0,42 | 0,5 |
| $H_2O$-Einsparung [%] | 8 | — | 17 | — |
| Druckfestigkeit [$N/mm^2$] | | | | |
| nach 2 d | 26 | 22 | 19 | 13 |
| nach 7 d | 42 | 38 | 35 | 25 |
| nach 28 d | 49 | 45 | 55 | 44 |
| Biegezugfestigkeit [$N/mm^2$] | | | | |
| nach 2 d | 5,6 | 5,1 | 4,1 | 3,5 |
| nach 7 d | 7,7 | 7,3 | 6,5 | 5,5 |
| nach 28 d | 8,9 | 8,8 | 9,1 | 8,4 |
| Ausbreitmaß [cm] | 14,3 | 14,3 | 14,8 | 14,5 |
| Erstarrungsprüfung | | | | |
| $H_2O$-Einsparung [%] | 10 | — | 7 | — |
| Erstarrungsbeginn | 4 h 55 min | 3 h 25 min | 4 h 30 min | 2 h 40 min |
| Erstarrungsende | 5 h 20 min | 3 h 55 min | 5 h 15 min | 3 h |

c) Die Verflüssigungswirkung von Gipsmischungen wird durch folgenden Versuch gezeigt:
500 g Gips werden mit 250 g Wasser und 5 g Verflüssigungsmittel gemischt. Die Mischung ist gut fließfähig.
Parallel dazu wird ein Vergleichsversuch ohne Zugabe von Verflüssigungsmittel durchgeführt. Diese Mischung ist standfest.

4

**0 090 434**

Beispiel 2

600 g Phenol, 400 g Carbazolfraktion mit einem Carbazolgehalt von 76% und 11 g Oxalsäure, gelöst in 59 g Wasser, werden in einem Rundkolben, versehen mit Rührwerk, Tropftrichter und Rückflußkühler zum Sieden erhitzt.

Innerhalb von 90 min wird mit 458,3 g 38%iger Formalinlösung versetzt und danach 150 min lang bei Siedehitze gerührt.

Anschließend erfolgt eine Destillation unter Normaldruck, die in 54 Minuten auf 130"C führt. Danach wird noch 1 min lang im Vakuum weiterdestilliert.

Es wird ein klares, gut fließendes Harz erhalten.

Ausbeute: 1038 g.

E. P. (K. S.): 64°C.

300 g des oben beschriebenen Harzes werden in einem Rundkolben mit Rührwerk, Tropftrichter, Rückflußkühler und Kontaktthermometer bei 140°C in 30 min mit 129 g konzentrierter Schwefelsäure versetzt. Es wird 10 min lang bei 140°C nachgerührt.

Danach werden langsam 1116 g Wasser zugegeben und dann mit 300 g 40%iger Natronlauge bis pH = 8,00 versetzt.

Ausbeute: 1845 g einer wäßrigen Lösung mit einem Festgehalt von 28 Gew.-%.

Analog zu Beispiel 1 werden an einer Portlandzementmischung Ausbreitmaß und Druckfestigkeit geprüft.

| | Verflüssigte Mischung | 0-Versuch |
|---|---|---|
| Wasser/Zement-Faktor | 0,5 | 0,5 |
| Ausbreitmaß [cm] | 28 | 20 |
| Druckfestigkeit [N/mm²] | | |
| nach 7 d | 22,3 | 20,3 |
| nach 28 d | 28,3 | 27,5 |

Beispiel 3

665 g Phenol und 35 g Carbazol werden in einer Apparatur gemäß Beispiel 1 auf 100°C erhitzt. Danach werden unter Rühren 14 g festes Natriumhydroxid und 741 g 38,4%ige Formalinlösung zugegeben. Die Temperatur fällt auf 58°C und steigt dann durch Exothermie auf 64°C. Anschließend wird bis zum Siedepunkt erhitzt und 1 h lang bei Siedetemperatur gehalten. Man läßt abkühlen und stellt mit etwa 105 ml 2 n HCl auf pH 7,5 ein.

Ausbeute: 1560 g einer wäßrigen Lösung mit einem Feststoffgehalt von 64 Gew.-%.

Analog zu Beispiel 1 werden an einer Hochofenzementmischung das Ausbreitmaß bestimmt:

| | Verflüssigte Mischung | 0-Versuch |
|---|---|---|
| Wasser/Zement-Faktor | 0,5 | 0,5 |
| Ausbreitmaß [cm] | 24,5 | 20 |

**Patentansprüche**

1. Verflüssigungsmittel für hydraulische oder lufthärtende mineralische Bindemittel auf Basis von wasserlöslichen Kondensationsprodukten ein- oder mehrwertiger Phenole mit Formaldehyd, dadurch gekennzeichnet, daß die Phenol-Formaldehyd-Kondensationsprodukte miteinkondensiertes Carbazol enthalten.

2. Verfahren zur Herstellung von Betonverflüssigern nach Anspruch 1, dadurch gekennzeichnet, daß Phenol und Carbazol in saurem Medium mit Formaldehyd kondensiert werden und das gebildete Harz sulfoniert wird.

5

**Claims**

1. Liquefying agent for hydraulic or air curing mineral binding material based on water soluble condensation products of mono- or polyvalent phenols with formaldehyd characterized in that the phenol-formaldehyde-condensation products contain condensed carbazole.

2. Process for the preparation of concrete thinner according to claim 1, whereas phenol and carbazole are condensed in acidic medium and the resulting resin is sulfonated.

**Revendications**

1. Agent de liquéfaction pour liants minéraux hydrauliques ou durcissables à l'air à base de produits de condensation solubles dans l'eau d'un ou plusieurs phénols avec le formaldéhyde, caractérisé en ce que les produits de condensation du formaldéhyde et du phénol contiennent un carbazol condensé.

2. Procédé de préparation de liquéfacteurs de béton selon la revendication 1, caractérisé en ce que le phénol et le carbazol sont condensés en milieu acide avec le formaldéhyde et en ce que la résine formée est sulfonée.